(19)
Europäisches
Patentamt
European
Patent Office
Office européen
des brevets

(11) **EP 2 013 711 B1**

(12) **EUROPEAN PATENT SPECIFICATION**

(45) Date of publication and mention
of the grant of the patent:
**01.12.2010 Bulletin 2010/48**

(21) Application number: **07727294.6**

(22) Date of filing: **23.03.2007**

(51) Int Cl.:
***G06F 9/345*** (2006.01)

(86) International application number:
**PCT/EP2007/052820**

(87) International publication number:
**WO 2007/110393 (04.10.2007 Gazette 2007/40)**

(54) **PROCESSOR WITH ADDRESS GENERATOR**

PROZESSOR MIT ADRESSENGENERATOR

PROCESSEUR DOTE D'UN GENERATEUR D'ADRESSE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **24.03.2006 EP 06111687
27.04.2006 US 745794 P**

(43) Date of publication of application:
**14.01.2009 Bulletin 2009/03**

(73) Proprietor: **Telefonaktiebolaget LM Ericsson
(publ)
164 83 Stockholm (SE)**

(72) Inventors:
• **PERSSON, Per
S-222 70 Lund (SE)**
• **GUSTAFSSON, Harald
S-223 63 Lund (SE)**

(74) Representative: **Akerman, Marten Lennart et al
Ericsson AB
Patent Unit Mobile Platforms
Nya Vattentornet
221 83 Lund (SE)**

(56) References cited:
**US-A1- 2004 003 199**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to a processor, which comprises an address generator for generating an address based on a base address and a fractional step.

**Background**

A processor can be used for processing data. The data may e.g. be stored in a memory, which is accessible by the processor. To access the data from the memory, the processor needs an address, at which the data is stored. The addresses that are needed for acquiring data for a certain application may be generated and temporarily stored in an address register. The address register may be continuously updated with new addresses during the progress of the application.

In many applications, a step for updating the address of the address register is not the same each time an updating operation is performed. The step may be either an increment or a decrement. Different applications may use different strategies for the steps. Furthermore, a step may even be fractional, e.g. a non-integer value, even though addresses of the memory are always located on integer positions. For example, if a step of 0.75 is needed, the following address sequence may be generated when the value of a starting address is 0: [0].75, [1].5, [2].25, [3].0, [3].75, [4].5, ..., wherein the integer part of the address sequence indicated within brackets will be used for the memory access. Here, it can be seen that the address having value 3 will be used twice. Some applications where fractional updating is used are interpolation; scaling, resampling, synchronization, and table look-up.

Updating an address for the address register a fractional amount is normally done by software instructions, or a sequence of software instructions, run by the processor. Also, it is known in the art that hardware units, which are external to a processor, perform interpolation based on fractional steps. The interpolation is hence performed outside the processor itself. The addresses generated as part of an interpolation method are not accessible by the software instructions. Performing only a predetermined interpolation method by the hardware units has the consequence that the resulting interpolated data is accessible to other units but not the address used for the interpolation. Hence, the address can only be used for a predetermined purpose, such as the predetermined interpolation method. This makes the hardware units inflexible.

In US 2004/0003199 A1, a memory interface device is disclosed providing a fractional address interface between a data processor and a memory system. The memory interface provides for interpolation of data values. The memory interface includes an address generator for generating first and second memory addresses, and a memory access unit for retrieving first and second data values and for interpolating between the first and second data values. The address generator comprises a register which contains a fractional address of the data to be retrieved from the memory system, and a register which contains a fractional offset to be applied to the address between memory fetches. After each memory fetch, the offset is added to the address using an adder, and the resulting address is placed in the address register ready for the next fetch. In one embodiment, the address generator also includes a modulo register and a base address register. These allow the adder to perform modulo arithmetic, thereby facilitating circular addressing.

An issue with updating an address for the address register by software run by the processor is that updating of the address is often done in kernel parts, such as inner loops, of the software. Normally, the inner loops are frequently being executed. Hence, any extra executed instructions to update the address register in a kernel part have a direct negative impact on the system performance. This issue is particularly severe for updating with a fractional step of an address for the address register, as all processor architectures available require executing a few extra software instructions to update the address by a fractional step.

In applications that use a fractional step for updating an address, the bottleneck of a core part of the processor is often getting data in and out from a data repository. One issue with getting data in and out is efficient updating of an address. As an example, a synth wave oscillator, which is basically an interpolator, needs fractional steps for updating an address for all input samples as well as all coefficients from a table. Consequently, even a small performance improvement in the updating with a fractional step of addresses may give substantial improvement of the performance of the system, wherein the address generation is utilized.

**Summary**

According to an embodiment of the invention, a processor for processing data comprises an address generator. The address generator is operative to generate an address based on a base address and an offset value, and to update said offset value by a fractional step. The processor may be a main processor, which comprises the address generator in a core part thereof. Alternatively, the processor may comprise a main processor and at least one co-processor operatively connected to the main processor. The co-processor comprises the address generator.

The address generator is operative to generate the address based on the base address and an offset value. The said offset value is updated by the fractional step.

The address generator is operative to generate the address based on a base address, which is a fractional base address.

The address generator may comprise a quantizer operative to generate the address based on the sum of the base address plus the offset value.

The address generator may be operative to generate the address based on a base address, which is an integer base address.

The address generator may comprise a quantizer operative to generate an integer offset value based on the offset value, which is based on the fractional step. The address generator may be operative to generate the address based on the integer offset value.

The address generator may comprise an adder operative to generate the sum of the base address plus the offset value.

The address generator may comprise an adder operative to generate and output the sum of an offset value, which is one of the offset value, which is based on the fractional step, and a input offset value, plus the fractional step. Additionally, the address generator may comprise a modulo counter operative to generate a subsequent offset value, to be used for generating a subsequent address, based on the output from the adder and a maximum offset value.

The address generator may comprise a multiplexer operative to output the offset value. The offset value may be one of the input offset value and an offset value generated by the modulo counter.

The address generator may be operative in response to at least one software instruction.

According to another embodiment, an electronic apparatus comprises the processor according to any of claims 1 to 12.

The electronic apparatus may be a mobile telephone. Further embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

Embodiments of the invention provide an efficient device for generating an address, which is accessible from any type of process, application, or operation. Thus, the address is not only accessible from a predetermined method.

## Brief Description of the Drawings

Further objects, features and advantages of embodiments of the invention will appear from the following detailed description, reference being made to the accompanying drawings, in which:

Fig. 1 is a block diagram of an embodiment of the processor comprising the address generator;
Fig. 2 is a block diagram of another embodiment of the processor comprising the address generator;
Fig. 3 is a block diagram of an embodiment of the address generator;
Fig. 4 is a block diagram of another embodiment of the address generator; and
Fig. 5 is a front-view of an electronic apparatus comprising the processor.

## Detailed Description

Embodiments of the invention will be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

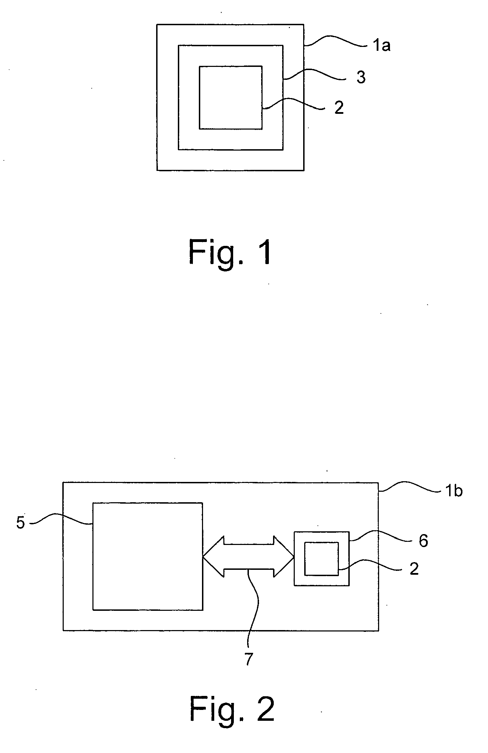

Fig. 1 illustrates an embodiment of a processor 1a for processing data. The processor 1a comprises an address generator 2. In the embodiment of Fig. 1a, the address generator 2 is integrated in a core part 3 of the processor 1a. The core part 3 is implemented in hardware. In this embodiment, the processor 1a is a main processor, in which the core part 3 is integrated. The core part 3 comprises the functional units of the processor 1a, with which the address generator 2 is integrated. The functional units may comprise an arithmetic unit, a register file, and a data access unit.

Fig. 2 illustrates another embodiment of the processor 1b for processing data. In this embodiment, the processor 1b comprises a main processor 5 and a co-processor 6. The co-processor 6 is implemented in hardware. The co-processor 6 is coupled to the main processor 5. In this embodiment, the co-processor 6 is coupled to the main processor 5 in a way that allows the main processor 5 to delegate the execution of certain software instructions to the co-processor. Hence, the main processor 5 can let certain software instructions in a flow of software instructions be executed by the co-processor 6. In the embodiment of Fig. 2, the co-processor 6 comprises the address generator 2. The co-processor 6 is operatively connected to the main processor 5. The main processor 5 and the co-processor 6 may be operatively connected by means of a co-processor interface 7. The main processor 5 may comprise a core part (not shown) not comprising any address generator for updating a base address.

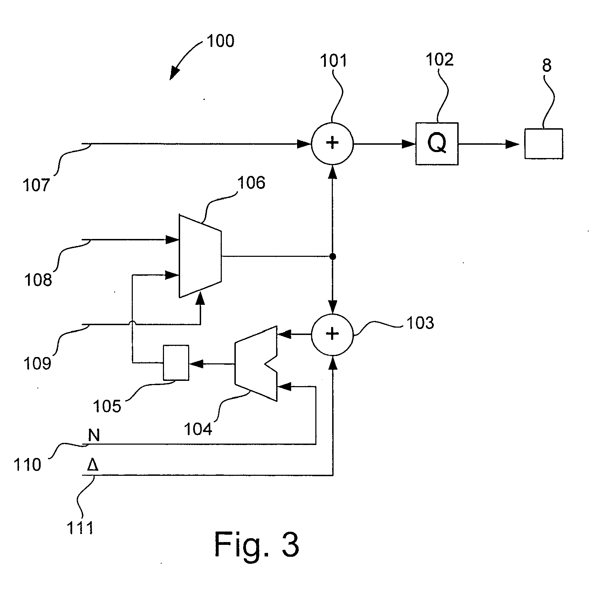

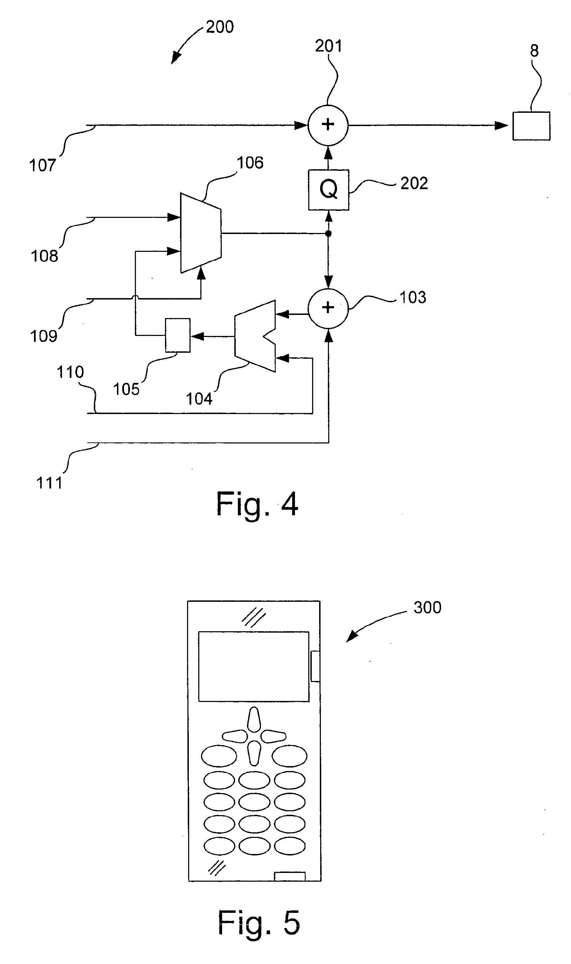

The address generator 2 is operative to generate an address 8 (Figs. 3 and 4) based on a base address and a fractional step. Embodiments of the invention provide for a processor 1a, 1b, which may generate an address 8 efficiently, as the address generator 2 is comprised in the processor 1a, 1b. Thus, the processor 1a, 1b according to embodiments of the invention may provide performance improvement compared to predetermined hardware units, e.g. as addresses are accessible and controllable by software instructions run by the processor 1a, 1b. Furthermore, the address generator 2 is more efficient than generating addresses, which are based on a fractional step, using a prior-art-processor executing software instructions, since e.g. fewer software instructions are executed. Fewer instructions are executed according to an embodiment of the invention since specialized software instructions supporting fractional address generation are available to be executed in comparison with generating addresses, which are based on a fractional step, using a prior-art-processor executing software instructions.

A step may be an increment. Alternatively, the step may be a decrement. A fractional step as used herein is a step, which is an integer or a non-integer amount or value. The fractional step may be used to update from a first address to a subsequent second address in a sequence of addresses. Thus, updating may be either incrementing or decrementing. A non-integer value may e.g. be a fixed-point number or a floating point number. Both integer values and non-integer values may be represented in binary form.

Processor 1a and main processor 5 may e.g. be a CPU (Central Processing Unit), a DSP (Digital Signal Processor), or a GPU (Graphics Processing Unit). A co-processor may be a special-purpose processor, which assists the main processor 5 in performing certain operations. The co-processor 6 extends the instruction set of the main processor 5. Hence, e.g. the efficiency of the whole system defined by the main processor 5 and the co-processor 6 is improved. In the embodiment of Fig. 2, the co-processor 6 is operative to assist the main processor 5 in generating the address 8 based on the base address and the fractional step.

The embodiment of Fig. 2 may e.g. be useful if the main processor 5 cannot handle operations based on a fractional step. Then, the co-processor 6 may be provided to perform any operation, which is based on a fractional step. Furthermore, the embodiment of Fig. 2 may be useful if the main processor 5 does not comprise any modulo counter. Then, the modulo counter may be integrated in the co-processor 6. Furthermore, the embodiment of Fig. 2 allows for the use of a standard main processor, which can be connected to a co-processor. This provides for an easy implementation of the processor 1b. The use of a co-processor interface 7 provides efficient communication between the main processor 5 and the co-processor. The co-processor 6 provides an extension of the software instructions set and extension of functional units. The extension of the software instructions set allows e.g. introduction of specialized software instructions supporting fractional address generation. The extension of the functional units supports e.g. fractional addressing mode. The extension of the instruction set e.g. provides for more efficient address generation based on a fractional step.

The embodiment of Fig. 1 provides e.g. for a highly integrated solution, such as if the address generator 2 is integrated in the core part 3 of the processor 1a.

Fig. 3 illustrates an embodiment of the address generator 100 for integration in the processor 1a, 1b. In this embodiment, the address generator 100 comprises a first adder 101, a quantizer 102, a second adder 103, a modulo counter 104, a register 105, a multiplexer 106, a first input terminal 107, a second input terminal 108, a third input terminal 109, a fourth input terminal 110, and a fifth input terminal 111.

A first input terminal of the first adder 101 is operatively connected to the first input terminal 107 of the address generator 100. A second input terminal of the first adder 101 is operatively connected to an output terminal of the multiplexer 106. An output terminal of the first adder 101 is operatively connected to an input terminal of the quantizer 102.

An output terminal of the quantizer 102 is operatively connected to an output terminal of the address generator 100.

A first input terminal of the second adder 103 is operatively connected to the output terminal of the multiplexer 106. A second input terminal of the second adder 103 is operatively connected to the fifth input terminal 111 of the address generator 100. An output terminal of the second adder 103 is operatively connected to a first input terminal of the modulo counter 104.

A second input terminal of the modulo counter 104 is operatively connected to the fourth input terminal 110 of the address generator 100. An output terminal of the modulo counter 104 is operatively connected to an input terminal of the register 105.

An output terminal of the register 105 is operatively connected to a first input terminal of the multiplexer 106.

A second input terminal of the multiplexer 106 is operatively connected to the second input terminal 108 of the address generator 100. A third input terminal of the multiplexer 106 is operatively connected to the third input terminal 109 of the address generator 100.

The address generator 100 is operative to generate the address 8 based on a base address and a fractional step. In the figures, the fractional step is denoted Δ.

In the embodiment of Fig. 3, the fractional step is provided at the fifth input terminal 111 of the address generator 100. The base address is provided at the first input terminal 107 of the address generator 100.

The base address may point at a first address in a sequence of addresses that should be generated. The base address may be different when different sequences of addresses are generated. The base address may be set adaptively.

In the embodiment of Fig. 3, the address generator 100 is operative to generate the address 8 based on a base address and an offset value. The offset value is based on the fractional step. Thus, the address generated will be indirectly based on the fractional step. The fractional step is used to update the offset value. Hence, the base address need not be updated in each access cycle, but instead the offset value is updated based on the fractional step. In some embodiments of the invention, the number of bits necessary to represent the offset value is less than the number of bits necessary to represent the base address and the generated address (8). Therefore, one benefit with updating the offset value instead of the base address in each access cycle is that of reduced computational complexity, and thereby reduced power consumption, reduced latency, and/or reduction of needed processing resources. When updating the offset value, the offset value is incremented (or decremented) based on the fractional step. This operation is performed for example by an adder. Then, a modulo operation or other limiting operation may be performed. This may for example be to limit the range of the generated addresses. The same type of operations would be performed if the base address would be updated. A benefit of updating the offset value instead of the base address is thus that operations performed in the process of updating the address generator to output a new generated address are less computationally complex when performed on the offset value instead of the base address.

The first adder 101 is operative to generate the sum of the base address plus the offset value. In the embodiment of Fig. 3, the offset value, on which the first adder 101 is operative, is a fractional offset value. The base address, on which the first adder 101 is operative, may be an integer base address or a fractional base address. A fractional base address is an address having a value between the value of a first integer address and the value of a second integer address, which is subsequent to the first integer address in a sequence of addresses. An integer base address is an address having an integer value. The output of the first adder 101, i.e. the sum of the value of the base address and the offset value, may thus, depending on the input values to the first adder 101, be a fractional value, i.e. a non-integer value. However, the address 8 generated by the address generator 100 should be an integer. Therefore, the quantizer 102 is operative to generate the address 8 based on the output of the first adder 101. The quantizer 102 is operative to extract the integer part of the output from the first adder 101. The extracted value is output by the quantizer 102 as the address 8 generated by the address generator 100. The quantizer may perform the following operation:

$$\text{Address}:=Q(\text{base address}+\text{offset value}),$$

where base address and offset value may be non-integer values having a positive or negative sign, Q is the operation extracting the integer part of the operand, and address is the resulting address 8 having a non-fractional value.

In the embodiment of Fig. 3, the offset value is provided by the multiplexer 106. The offset value may be generated by the address generator 100 or received as an input offset value on the second input terminal 108 of the address generator 100. The input offset value may be a fractional offset value. The multiplexer 106 may be responsive to a control signal provided on the third input terminal 109 of the address generator 100. Depending on the value of the control signal, e.g. a "0" or a "1", the input offset value or an accumulated offset value held by the register 105 is output by the multiplexer 106. The input offset value may be different for each access on the address generator 100.

For generating a first address of a sequence of addresses, the input offset value may be used. Then, for any subsequent offset value for the sequence of addresses to be generated, offset values from the register 105 may be used. The register 105 may be set before a sequence of addresses is to be generated. An initial value of the register 105 may e.g. be 0.

The second adder 103 may be a step adder. The second adder 103 is operative to add the fractional step to the offset value provided by the multiplexer 106. Thus, the offset value is updated a fractional amount. The output of the second adder 103 is forwarded to the modulo counter 104. The second adder 103 is operative to generate and output the sum of the offset value plus the fractional step. The offset value may be one of the offset value, which is based on the fractional step, and the input offset value.

The modulo counter 104 is operative to generate a subsequent offset value, to be used for generating a subsequent address. The modulo counter 104 is operative to count modulo N based on the updated offset value provided by the second adder 103. The modulo counter 104 may e.g. perform the following updating operation:

$$\texttt{offset value}_{n+1}\texttt{:=mod(offset value}_n\texttt{+}\Delta_n\texttt{,N}_n\texttt{),}$$

where mod represents the modulo operation, $\Delta$ the fractional step, and n specifies each access cycle. The updating operation may, but does not have to, be performed as part of reading the generated address.

The modulo counter 104 is operative to ascertain that the offset value will be non-negative and will remain less than a maximum offset value N. Thus, it is ascertained that an address having a value, which exceeds a maximum value, is not generated. Consequently, only addresses within a certain address range determined by the base address and the maximum offset value N will be generated by the address generator 100. For example, assume N=4. Then, if the offset value, on which the modulo counter 104 operates, is 3.75, the modulo counter 104 will output the offset value 3.75. However, if the offset value, on which the modulo counter 104 operates, is 4.75, the modulo counter 104 will output the offset value 0.75.

The register 105 is operative to temporarily store one or several offset values until it/they is/are needed by the multiplexer 106.

The embodiment of the address generator 200 illustrated in Fig. 4 is similar to the embodiment of Fig. 3. Therefore, components of the embodiment of Fig. 3, which have the same or similar function as components of the embodiment of Fig. 4, have been denoted by the same reference numerals. Therefore, any function or effect described with regard to a certain component illustrated in Fig. 3 is also provided by the corresponding component of the embodiment of Fig. 4. Also, the connections of components are the same if not stated otherwise.

The basic difference between the embodiments of Figs 3 and 4 is that the quantizer 202 of the embodiment of Fig. 4 has been relocated compared to the quantizer 102 of the embodiment of Fig. 3. An input terminal of quantizer 202 is operatively connected to the output terminal of the multiplexer 106. An output terminal of quantizer 202 is operatively connected to the second input terminal of the first adder 201. The output terminal of the first adder 201 is operatively connected to the output terminal of the address generator 200. Quantizer 202 is operative on the offset value provided by the multiplexer 106. Quantizer 202 is operative to output the integer part of the offset value input thereto. This may be performed in the same manner as has been described with regard to quantizer 102.

Quantizer 202 is operative to provide an integer offset value, which is based on the fractional step. In the embodiment of Fig. 4, the value of the base address may only be an integer value.

The first adder 201 of the embodiment of Fig. 4 need only be operative to add integer values, as the offset value and the value of the base address are integer values. Consequently, the sum of the base address and the integer offset value provided by quantizer 202 will be an integer value, which is the address 8 generated by the address generator 200.

Providing the base address and the offset value as integer values allows e.g. for a less complex implementation of the first adder 201. Thus, a processor 1a, 1b comprising the address generator 200 of Fig. 4 is less complex than if the address generator 100 according to Fig. 3 is provided. Consequently, the cost of the processor 1a, 1b may be reduced.

The fractional step may be a positive or negative fractional step. Furthermore, the base address value may be any address of a range of addresses when negative fractional steps are allowed.

In the embodiment of Fig. 4, the address generator 200 is operative to generate the address 8 based on a base address and a quantized offset value. The quantized offset value is based on the fractional step. Thus, the address generated will be indirectly based on the fractional step. Similarly to the embodiment of Fig. 3, the base address need not be updated in each access cycle, but instead the (un-quantized) offset value is updated based on the fractional step. A benefit of updating the offset value instead of the base address is thus that operations, such as increments/decrements, modulo operations, and quantizations, performed in the process of updating the address generator to output a new generated address are less computationally complex when performed on the offset value instead of the base address. Therefore, one benefit with updating the offset value instead of the base address is that of reduced computational complexity, and thereby reduced power consumption, reduced latency, and/or reduction of needed processing resources.

In some embodiments, N may be an integer or fractional value. Thus, the modulo counter 104 may be operative on N being an integer and/or fractional N. In other embodiments, the modulo counter 104 is only operative on N being an integer value. The latter modulo counter is less complex to implement, allowing e.g. for a less complex processor 1a, 1b, compared to using N having a fractional value.

The address generator 100, 200 is operative in response to at least one software instruction. The software instruction, in response to which the address generator is responsive, may e.g. comprise the input value(s) at any of the first input terminal 107, the second input terminal 108, the third input terminal 109, the fourth input terminal 110, and the fifth input terminal 111. Alternatively or additionally, the software instruction, in response to which the address generator 100, 200 is responsive, may e.g. either explicitly or indirectly from e.g. a register provide the input values at the first input terminal 107, the second input terminal 108, the third input terminal 109, the fourth input terminal 110 and the fifth input terminal 111. Still alternatively or additionally, the software instruction may be an instruction to request the address 8.

Consequently, the processor 1a, 1b has the advantage that the address 8 may be generated in response to a software instruction of any process, application, or operation, whereby high flexibility is achieved.

The input values at the first input terminal 107, the second input terminal 108, the fourth input terminal 110, and the fifth input terminal 111 of the address generator 100, 200, may be provided by the processor 1a, 1b. The input values may be generated when the processor 1a, 1b runs software instructions for e.g. a certain process, application or operation. In some embodiments, all input values are generated before an instruction loop for a process, an application, or an operation is entered. Then, the addresses are generated in response to the control signal applied on the third input terminal 109. The control signal may be generated in response to executing an instruction, e.g. during an inner instruction loop. In other embodiments, all input values except the fractional step is generated before one or several inner instruction loops for a process, an application, or an operation is/are entered. Then, the fractional step is adaptively generated within the inner instruction loop(s). An address may then be generated in response to providing the fractional step. Consequently, in embodiments of the invention, a single instruction comprising the fractional step or the control signal is sufficient for providing a new address. The software instruction, in response to which the address generator 100, 200 is responsive, may comprise reading a generated address 8 as well as providing a new fractional step. This allows for efficient generation of the address 8. For inner instruction loops comprising few instructions, this allows for a substantial performance boost, as the percentage of the instructions relating to the generation of the address 8 in the inner instruction loop is substantially reduced compared to generating the address using a prior-art-processor executing software instructions only, where the address is generated entirely in the inner loop. Consequently, the performance will be substantially improved with embodiments of the invention. Also, the address generation can be performed in parallel with other operations performed by the core part 3 of the processor 1a (see Fig. 1) or by the main processor 5 and co-processor 6 of the processor 1b (see Fig. 2).

The generated address (8) provided by embodiments of the invention may, for example, be used by the processor (1a, 1b) to access a memory and/or a register. The memory/register access may for example provide for reading from and/or writing to the memory/register.

Embodiments of the invention provide for generating addresses that are not subsequent addresses. This is e.g. possible by adjusting the fractional step and/or the value of the base address accordingly, e.g. by having a fractional step >1. Moreover, this allows e.g. for improved interpolation possibilities, as it provides for interpolation between data values that are not neighboring. Neighboring data values are data values that are stored on neighboring addresses of a memory. Addresses are neighboring if they are subsequent addresses. Other interpolation methods may also be used, such as using data values from subsequent addresses. If so, the same fractional step may be used for generating multiple addresses. Thus, the processor 1a, 1b according to embodiments of the invention may be used for several different interpolation methods without any modifications of the hardware, which e.g. provides flexibility.

Embodiments of the invention also allows for generating addresses based on a fractional offset, and a fractional step. In some embodiments, also the value of the base address is a fractional value. As the input values to the address generator 2, 100, 200 may be provided in a plurality of different ways, the address generator 2, 100, 200, and thus the processor 1a, 1b, is flexible. A fractional base address may be used to obtain addresses that are rounded to nearest integer address by increasing e.g. the base address by 0.5

The input values to the address generator 2, 100, 200 may e.g. be provided by a process, an application, or an operation. The address generator 2, 100, 200 may be independent of the purpose, for which the generated address 8 should be used. Thus, embodiments of the invention provides for using a single address generator 2, 100, 200 for generating addresses based on fractional steps, which addresses are used for multiple purposes. Thus, the addresses may be requested from multiple and/or different processes, applications, or operations. Therefore, embodiments of the invention provide a cheap and space saving design, as multiple address generators are not necessary.

The processor 1a, 1b and the address generator, 2, 100, 200 may be provided in hardware comprising hardwired components.

Fig. 5 illustrates an electronic apparatus 300 comprising the processor 1a, 1b. The processor 1a, 1b may be comprised in any electronic apparatus having a need for generating addresses using a fractional step. In Fig. 5, the electronic apparatus 300 is embodied as a mobile telephone. In other embodiments, the processor 1a, 1b is comprised in a stationary, a portable, or a handheld mobile radio communication equipment, a mobile radio terminal, a mobile telephone, a pager, a communicator, an electronic organizer, a smartphone or a computer. These are only examples and not limiting of the invention.

The present invention has been described above with reference to specific embodiments. However, other embodiments than the above described are possible within the scope of the invention. The different features of the invention may be combined in other combinations than those described. The scope of the invention is only limited by the appended patent claims.

**Claims**

1. A processor (1a, 1b) for processing data, comprising:

   an address generator (2, 100), which is operative to generate a sequence of addresses (8) having quantized non-fractional values and being based on a base address and a fractional offset value,

   **characterized in that** the address generator:

   is further operative to update said fractional offset value by a fractional step (Δ) from generation of one address to a subsequent address in said sequence of addresses,
   is further operative to temporarily store the updated fractional offset value for generation of the subsequent address, and
   comprises a quantizer (102) operative to generate the address (8) based on a sum of the base address and the fractional offset value.

2. A processor (1a, 1b) for processing data, comprising:

   an address generator (2, 200), which is operative to generate a sequence of addresses (8) having quantized non-fractional values and being based on a base address and a fractional offset value,

   **characterized in that** the address generator:

   is further operative to update said fractional offset value by a fractional step (Δ) from generation of one address to a subsequent address in said sequence of addresses,
   is further operative to temporarily store the updated fractional offset value for generation of the subsequent address,
   is further operative to generate the address (8) based on a sum of the base address and an integer offset value, and
   comprises a quantizer (202) operative to generate the integer offset value based on the fractional offset value.

3. The processor according to claim 1 or 2, wherein the processor (1a) is a main processor, which comprises the address generator (2, 100, 200) in a core part (3) thereof.

4. The processor according to claim 1 or 2, comprising a main processor (5) and at least one co-processor (6) operatively connected to the main processor, wherein the co-processor comprises the address generator (2, 100, 200).

5. The processor according to claim 1, wherein the base address is a fractional base address.

6. The processor according to claims 1 or 5, wherein the base address is increased by 0.5.

7. The processor according to claim 1 or 2, wherein the base address is an integer base address.

8. The processor according to any of claims 1 to 7, wherein the address generator (2, 100, 200) comprises an adder (103) operative to generate and output the sum of an offset value, which is one of the fractional offset value, which is based on the fractional step, and an input offset value, plus the fractional step, and a modulo counter (104) operative to generate a subsequent offset value, to be used for generating a subsequent address, based on the output from the adder (103) and a maximum offset value (N).

9. The processor according to claim 8, wherein the address generator (2, 100, 200) comprises a multiplexer (106) operative to output the offset value, which is one of the input offset value and an offset value generated by the modulo counter (104).

10. The processor according to any of the previous claims, wherein the address generator (2, 100, 200) is operative in response to at least one software instruction.

11. The processor according to any of the previous claims, wherein a number of bits necessary to represent the fractional offset value is less than a number of bits necessary to represent the base address.

**12.** An electronic apparatus, comprising the processor according to any of claims 1 to 11.

**13.** The electronic apparatus according to claim 12, wherein the electronic apparatus is a mobile telephone.

**Patentansprüche**

**1.** Prozessor (1a, 1b) zum Verarbeiten von Daten, umfassend:

einen Adressengenerator (2, 100), der so funktioniert, dass er eine Folge von Adressen (8) erzeugt, die quantisierte nichtgeteilte Werte aufweisen und auf einer Basisadresse und einem geteilten Versatzwert basieren,

**dadurch gekennzeichnet, dass** der Adressengenerator:

ferner so funktioniert, dass er den geteilten Versatzwert durch einen Teilschritt ($\Delta$) aus der Erzeugung einer Adresse auf eine folgende Adresse in der Folge von Adressen aktualisiert,
ferner so funktioniert, dass er den aktualisierten geteilten Versatzwert zur Erzeugung der folgenden Adresse vorübergehend speichert, und
einen Quantisierer (102) umfasst, der so funktioniert, dass er die Adresse (8) basierend auf einer Summe der Basisadresse und des geteilten Versatzwertes erzeugt.

**2.** Prozessor (1a, 1b) zum Verarbeiten von Daten, umfassend:

einen Adressengenerator (2, 200), der so funktioniert, dass er eine Folge von Adressen (8) erzeugt, die quantisierte nicht geteilte Werte aufweisen und auf einer Basisadresse und einem geteilten Versatzwert basieren,

**dadurch gekennzeichnet, dass** der Adressengenerator:

ferner so funktioniert, dass er den geteilten Versatzwert durch einen Teilschritt ($\Delta$) aus der Erzeugung einer Adresse auf eine folgende Adresse in der Folge von Adressen aktualisiert,
ferner so funktioniert, dass er den aktualisierten geteilten Versatzwert zur Erzeugung der folgenden Adresse vorübergehend speichert,
ferner so funktioniert, dass er die Adresse (8) basierend auf einer Summe der Basisadresse und eines ganzzahligen Versatzwertes erzeugt, und
einen Quantisierer (202) umfasst, der so funktioniert, dass er den ganzzahligen Versatzwert basierend auf dem geteilten Versatzwert erzeugt.

**3.** Prozessor nach Anspruch 1 oder 2, wobei der Prozessor (1a) ein Hauptprozessor ist, der den Adressengenerator (2, 100, 200) in einem Kernteil (3) davon umfasst.

**4.** Prozessor nach Anspruch 1 oder 2, umfassend einen Hauptprozessor (5) und mindestens einen Coprozessor (6), der betrieblich mit dem Hauptprozessor verbunden ist, wobei der Coprozessor den Adressengenerator (2, 100, 200) umfasst.

**5.** Prozessor nach Anspruch 1, wobei die Basisadresse eine geteilte Basisadresse ist.

**6.** Prozessor nach Anspruch 1 oder 5, wobei die Basisadresse um 0,5 erhöht wird.

**7.** Prozessor nach Anspruch 1 oder, wobei die Basisadresse eine ganzzahlige Basisadresse ist.

**8.** Prozessor nach einem der Ansprüche 1 bis 7, wobei der Adressengenerator (2, 100, 200) einen Addierer (103), der so funktioniert, dass er die Summe eines Versatzwertes, der einer von dem geteilten Versatzwert, der auf dem Teilschritt basiert, und einem eingegebenen Versatzwert ist, plus dem Teilschritt erzeugt und ausgibt, und einen Modulo-Zähler (104) umfasst, der so funktioniert, dass er basierend auf der Ausgabe vom Addierer (103) und einem maximalen Versatzwert (N) einen folgenden Versatzwert erzeugt, der zum Erzeugen einer folgenden Adresse verwendet werden soll.

**9.** Prozessor nach Anspruch 8, wobei der Adressengenerator (2, 100, 200) einen Multiplexer (106) umfasst, der so funktioniert, dass er den Versatzwert ausgibt, der einer von dem eingegebenen Versatzwert und einem durch den Modulo-Zähler (104) erzeugten Versatzwert ist.

10. Prozessor nach einem der vorhergehenden Ansprüche, wobei der Adressengenerator (2, 100, 200) als Reaktion auf wenigstens eine Softwareanweisung funktioniert.

11. Prozessor nach einem der vorhergehenden Ansprüche, wobei eine Anzahl von Bits, die zum Darstellen des geteilten Versatzwertes erforderlich sind, niedriger als eine Anzahl von Bits ist, die zum Darstellen der Basisadresse erforderlich sind.

12. Elektronische Vorrichtung, umfassend den Prozessor nach einem der Ansprüche 1 bis 11.

13. Elektronische Vorrichtung nach Anspruch 12, wobei es sich bei der elektronischen Vorrichtung um ein Mobiltelefon handelt.

**Revendications**

1. Processeur (1a, 1b) pour traiter des données, comprenant:

   un générateur d'adresse (2, 100), qui est opérationnel afin de générer une séquence d'adresses (8) ayant des valeurs non fractionnelles quantifiées et étant basées sur une adresse de base et une valeur de décalage fractionnel,

   **caractérisé en ce que** le générateur d'adresse:

   est en outre opérationnel afin de mettre à jour ladite valeur de décalage fractionnelle par une étape fractionnelle ($\Delta$) à partir de la génération d'une adresse en une adresse suivante dans ladite séquence d'adresses, est en outre opérationnel afin de mémoriser temporairement la valeur de décalage fractionnelle mise à jour en vue de la génération de l'adresse suivante, et comprend un quantificateur (102) opérationnel afin de générer l'adresse (8) sur la base d'une somme de l'adresse de base et de la valeur de décalage fractionnelle.

2. Processeur (1a, 1b) pour traiter des données, comprenant:

   un générateur d'adresse (2, 100), qui est opérationnel afin de générer une séquence d'adresse (8) ayant des valeurs non fractionnelles quantifiées et étant basée sur une adresse de base et une valeur de décalage fractionnelle,

   **caractérisé en ce que** le générateur d'adresse:

   est en outre opérationnel afin de mettre à jour ladite valeur de décalage fractionnelle par une étape fractionnelle ($\Delta$) à partir de la génération d'une adresse en une adresse suivante dans ladite séquence d'adresses, est en outre opérationnel afin de mémoriser temporairement la valeur de décalage fractionnelle mémorisée en vue de la génération de l'adresse suivante, est en outre opérationnel afin de générer l'adresse (8) sur la base d'une somme de l'adresse de base et d'une valeur de décalage d'entier, et comprend un quantificateur (202) opérationnel afin de générer la valeur de décalage d'entier sur la base de la valeur de décalage fractionnelle.

3. Processeur selon la revendication 1 ou 2, dans lequel le processeur (1a) est un processeur principal, qui comprend le générateur d'adresse (2, 100, 200) dans une partie centrale (3) de celui-ci.

4. Processeur selon la revendication 1 ou 2, comprenant un processeur principal (5) et au moins un co-processeur (6) connecté opérationnellement au processeur principal, dans lequel le co-processeur comprend le générateur d'adresse (2, 100, 200).

5. Processeur selon la revendication 1, dans lequel l'adresse de base est une adresse de base fractionnelle.

6. Processeur selon les revendications 1 à 5, dans lequel l'adresse de base est augmentée de 0.5.

7. Processeur selon la revendication 1 ou 2, dans lequel l'adresse de base est une adresse de base d'entier.

8. Processeur selon une quelconque des revendications 1 à 7, dans lequel le générateur d'adresse (2, 100, 200) comprend un sommateur (103) opérationnel afin de générer et délivrer la somme d'une valeur de décalage, qui est une de la valeur de décalage fractionnelle, qui est basée sur l'étape fractionnelle, et une valeur de décalage d'entrée, plus l'étape fractionnelle, et un compteur modulo (104) opérationnel afin de générer une valeur de décalage suivante, à utiliser afin de générer une adresse suivante, sur la base de la sortie de l'additionneur (103) et d'une valeur de décalage maximale (N).

9. Processeur selon la revendication 8, dans lequel le générateur d'adresse (2, 100, 200) comprend un multiplexeur (106) opérationnel afin de délivrer la valeur de décalage, qui est une de la valeur de décalage d'entrée et d'une valeur de décalage générée par le compteur modulo (104).

10. Processeur selon une quelconque des revendications précédentes, dans lequel le générateur d'adresse (2, 100, 200) est opérationnel en réponse à au moins une instruction logicielle.

11. Processeur selon une quelconque des revendications précédentes, dans lequel un nombre de bits nécessaire pour représenter la valeur de décalage fractionnelle est inférieur à un nombre de bits nécessaire pour représenter l'adresse de base.

12. Appareil électronique, comprenant le processeur selon une quelconque des revendications 1 à 11.

13. Appareil électronique selon la revendication 12, dans lequel l'appareil électronique est un téléphone mobile.

Fig. 1

Fig. 2

Fig. 3

Fig. 4

Fig. 5

**EP 2 013 711 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040003199 A1